# EUROPÄISCHE PATENTANMELDUNG

(11) **EP 0 523 492 A1**
(43) Veröffentlichungstag der Anmeldung: **20.01.1993**
(21) Anmeldenummer: 92111403.9
(22) Anmeldetag: 06.07.1992
(51) Int. Cl.: G11B 19/12, G11B 27/10, G11B 27/24, G11B 23/42, G11B 33/10

(54) **System zur Wiedergabeprogrammierung von auf einem Aufzeichnungsträger gespeicherten Aufzeichnungsbeiträgen**

(30) Priorität: 18.07.1991 DE 4123758; 25.09.1991 DE 4131884
(71) Anmelder: TELEFUNKEN Fernseh und Rundfunk GmbH, D-30453 Hannover (DE)
(72) Erfinder: Lenz, Paul, W-3000 Hannover 1 (DE); Kühn, Hans-Robert, W-7742 St. Georgen (DE)

(57) **Zusammenfassung**

2.1. Bei einer Farbbildröhre mit waagerechten Farbstreifen und Indexstreifen erzeugen die Indexstreifen ein Signal, mit dem die Ablenkung nachgeregelt wird. Durch die Trägkeit in der Regelung der Ablenkströme kann diese Regelung nicht genügend schnell nach Ermittlung der Abweichung erfolgen. Aufgabe ist es, diese Verzögerung in der Regelung auszugleichen.

2.2. Jeweils während einer Zeile werden Meßwerte über die Abweichungen in der Lage des Elektronenstrahls ermittelt, als digitale Spannungswerte in einem Speicher (5, 6) abgelegt und in einer folgenden Zeile zur Korrektur der Lage des Elektronenstrahls verwendet.

2.3. Insbesondere für Farbbildröhren mit flachem Bildschirm für Fernsehempfänger

## Beschreibung

Die Erfindung betrifft ein System zur Wiedergabeprogrammierung auf einem Aufzeichnungsträger gespeicherten Aufzeichnungsbeiträgen und/oder Informationen.

Bei der Wiedergabe von Musik-, Sprach- und/oder Videoinformationen oder -signalen, auch Textinformationen von einem bespielten Aufzeichnungsträger stellt sich immer wieder das Problem ein, daß der Benutzer nicht alle auf dem Aufzeichnungsträger gespeicherten Aufzeichnungsbeiträge oder Informationen, wie z.B. Musikvideos, Texte und sonstige Informationen hören und/oder sehen möchte, sondern nur eine begrenzte Anzahl oder nur individuell gewünschte Aufzeichnungsbeiträge oder Informationen. Dieses Wunschverhalten führt üblicherweise dazu, daß nach dem Abspielen eines Wunschtitels eventuell Aufzeichnungsbeiträge übersprungen werden müssen, bis der nächste Wunschtitel wiedergegeben werden kann.

Mit einer Wiedergabevorrichtung, z.B. einem CD-Player, der nach dem Einlegen der CD unter anderem die Zahl, Titelnummer und Sprungadresse eines einzelnen Aufzeichnungsbeitrags abspeichert, ist es möglich, mittels einer dem CD-Player zugeordneten Bedienungseinrichtung, z.B. Fernbedienung, nur die gewünschten Beiträge abzurufen. Dazu müssen entweder vor Beginn der gesamten Wiedergabe alle gewünschten Titelnummern der gewünschten Aufzeichnungsbeiträge eingegeben werden, oder nach dem Abspielen eines Aufzeichnungsbeitrages wird die Titelnummer des nächsten gewünschten Beitrages eingegeben.

Eine solche Wiedergabeprogrammierung ist jedoch relativ aufwendig, da der Benutzer nach jedem Einlegen einer CD oder nach dem Abspielen eines jeden Aufzeichnungsbetrages tätig werden muß, um die gewünschte Titelangabe vorzunehmen. Ist ein CD-Player in der Lage, für mehrere CD die entsprechend gewünschten Titelnummern abzuspeichern, weiß der Benutzer nach einer gewissen Zeit nicht mehr, welche Wunschtitel von einer bestimmten CD automatisch wiedergegeben werden. Dazu muß erst einmal die CD in den CD-Player eingelegt werden. Vor dem Einlegen der CD in den CD-Player ist ein Dritter überhaupt nicht in der Lage zu beurteilen, welche Titel bei der Wiedergabe automatisch selektiv abgespielt oder nicht wiedergegeben werden.

Es ist eine Aufgabe der Erfindung, ein System zur Wiedergabeprogrammierung von Aufzeichnungsbeiträgen oder Informationen von einem Aufzeichnungsträger zu schaffen, welches eine einfache und übersichtliche Wiedergabeprogrammierung erlaubt und den bisherigen, sichtbaren Informationen auf dem Aufzeichnungsträger erhält.

Eine weitere Aufgabe der Erfindung ist es, bisherige Aufzeichnungsträger z.B. Compact-Disks, die die Merkmale der Erfindung bislang nicht aufweisen, in das erfindungsgemäße Wiedergabeprogrammiersystem einzubinden, um sie auf einfache Weise nachzurüsten.

Die erste Aufgabe wird mit einem System zur Wiedergabeprogrammierung, welches die Merkmale nach Anspruch 1 aufweist, gelöst. In den weiteren Ansprüchen sind sehr vorteilhafte Ausgestaltungen einzelner Merkmale des Gesamtsystems beschrieben.

Der Aufzeichnungsträger selbst weist einen abtastbaren, vorzugsweise einen optisch abtastbaren, Bereich mit wenigstens einer örtlich vorbestimmten, manuell oder maschinell markierbaren Stelle auf. Die markierbaren Stellen oder Felder bilden einen abtastbaren Code. Jeder Stelle oder Codewert ist ein gespeicherter Aufzeichnungsbeitrag auf dem Aufzeichnungsträger zugeordnet. Aufzeichnungsträger, die einen solchen Bereich oder Tabelle nicht aufweisen, können mit einem haftbaren Etikett oder Aufkleber nach Anspruch 6 nachgerüstet werden, wobei der Bereich auf dem Etikett oder Aufkleber die genannten Merkmale, wie vorstehend beschrieben, aufweist.

Der erfindungsgemäße Aufzeichnungsträger ist sehr einfach zu programmieren, die Wertmarkierungstabelle auf dem Aufzeichnungsträger ist fest und vorzugsweise unlösbar mit diesem verbunden, die Programmierung bzw. die Zuordnung einer Stelle des Bereiches zu einem Aufzeichnungsbeitrag oder Titel ist für jedermann übersichtlich, zumal auf einem Aufzeichnungsträger ohnehin häufig Informationen über die einzelnen Aufzeichnungsbeiträge angebracht sind. Außerdem bildet die Tabelle mit dem Aufzeichnungsträger eine vorteilhafte bauliche Einheit, so daß eine Programmierung immer unmißverständlich nur für einen Aufzeichnungsträger und die entsprechenden Aufzeichnungsbeiträge gelten kann und die Programmierung selbst für einen Benutzer auch jederzeit lesbar ist.

Es ist zweckmäßig, wenn der Aufzeichnungsträger, wie in Anspruch 2 beschrieben, ausgebildet ist und der Bereich mit den markierbaren Stellen oder Feldern schon für den Benutzer fertig aufgebracht, z.B. aufgedruckt oder aufgeklebt ist.

Vorzugsweise ist der Aufzeichnungsträger eine CD, MOD (Magneto Optische Disk), Foto-CD oder dergl. der eine Abtastseite und eine Labelseite aufweist, wobei der Bereich in Form der Tabelle auf der Labelseite oder Abtastseite ders angeordnet ist und jeder markierbaren Stelle eine Sprungadresse eines Aufzeichnungsbeitrages der CD oder MOD zugeordnet ist. Dabei stellt die Sprungadresse vorzugsweise die Startadresse eines Aufzeichnungsbeitrages dar. Vorzugsweise werden bei der Wiedergabeprogrammierung die Werte zu unerwünschten Aufzeichnungsbeiträgen markiert (negative Selektion). Es ist auch möglich, durch verschiedene Markierungsarten, wie z.B. Strich-, Balken-, Kreis-, Alphanumerik-Markierungen usw. an einer Stelle, eine unterschiedliche Steuerung von Wiedergabeparametern wie Lautstärke, Klang, Dynamik usw. zu errreichen. Dazu kann es zweckmäßig sein, wenn der markierbare Bereich zusätzliche, nicht einem bestimmten Aufzeichnungsbeitrag zugeordnetem, markierbare Stellen aufweist. Wird eine solche markiert, kann damit bei der Wiedergabe von Musiksignalen z.B. die Lautstärke oder Dynamik auf einen vorbestimmten Wert begrenzt werden. Durch die zusätzlichen Stellen oder zusätzlichen Markierungsarten wird eine individuelle Wiedergabeprogrammierung der Aufzeichnungsbeiträge unterstutzt.

Es ist sinnvoll, wenn der Bereich bei einem kreisförmigen Aufzeichnungsträger, wie einer CD oder MOD, als kreis- oder teilkreis- oder spiralförmiger Ring ausgebildet ist, so daß die Werte bei Rotation des Aufzeichnungsträgers abgetastet werden können. Außerdem sollte der abtastbare Bereich Synchronisationmarken zur Abtast- und Lesesteuerung der Stellen aufweisen.

Vorzugsweise sind die Markierungen der Stellen in dem Bereich löschbar, so daß eine einfache Umprogrammierung durchgeführt werden kann. Außerdem ist es zweckmäßig, die Zahl der möglichen Markierungen bzw. Stellen in dem Bereich der Titelzahl auf dem Aufzeichnungsträger anzupassen.

Des weiteren ist das System zur Wiedergabeprogrammierung von Aufzeichnungsbeiträgen mit einem Aufzeichnungsträger gekennzeichnet durch ein Verfahren zur Steuerung einer Wiedergabevorrichtung mit einer Aufnahmevorrichtung für den Aufzeichnungsträger, wobei mittels des Verfahrens das Abspielen von selektiven Aufzeichnungsbeiträgen eines Aufzeichnungsträgers durchgeführt werden kann und das Verfahren die folgenden Verfahrensschritte aufweist:
a: Nach Einlegen oder Auflegen des Aufzeichnungsträgers in die Wiedergabevorrichtung wird der Bereich mittels einer in der Wiedergabevorrichtung angeordneter Leseeinrichtung abgetastet;
b: Die markierten und/oder unmarkierten Stellen des Bereiches werden detektiert und die dedektierten Werte gespeichert;
c: Die den markierten und/oder unmarkierten Stellen zugeordneten und somit gewünschten Aufzeichnungsbeiträge werden wiedergegeben.

Vorzugsweise werden an der Wiedergabevorrichtung die markierten und/oder unmarkierten Werte optisch und/oder akustisch angezeigt, so daß der Benutzer, nach dem er den Aufzeichnungsträger in oder auf die Wiedergabevorrichtung gelegt hat, ständig darüber informiert ist, welche Aufzeichnungsbeiträge nacheinander oder gemäß einer Selektionsreihenfolge wiedergegeben werden.

Ist der Aufzeichnungsträger wie eine CD, MOD oder Schallplatte kreisförmig ausgebildet, ist es zweckmäßig, die Tabelle beim Rotieren des Aufzeichnungsträgers abzutasten. Die Leseeinrichtung für den abtastbaren Bereich kann somit feststehend in der Wiedergabevorrichtung angeordnet werden, wenn der Bereich auf der Labelseite angeordnet ist.

Vorzugsweise weist der Aufzeichnungsträger während des Abtastvorgangs für die Tabelle eine gleichbleibende Rotationsgeschwindigkeit auf. Insbesondere in dem Bereich des Bereiches oder der Tabelle, in dem die Stellen markiert werden können, sollte der Bereich gleich große Markierungsstellen oder -felder aufweisen, um bei gleichbleibender Rotationsgeschwindigkeit beim Abtasten eine möglichst fehlersicheren Lesevorgang des abtastbaren Bereichs zu gewährleisten.

Sehr vorteilhaft läßt sich das Verfahren auch zum Steuern einer als automatischen Wechslervorrichtung ausgebildeten Wiedergabevorrichtung mit einem Steuersystem verwenden, wobei das Steuersystem das sukzessive und/oder selektive Abspielen einer Vielzahl von Aufzeichnungsträgern ermöglicht, unter Verwendung eines Aufzeichnungsträgers wie vorstehend beschrieben und unter Verwendung einer Leseeinrichtung in der Wechsler - oder Wiedergabevorrichtung, wobei die Leseeinrichtung die örtliche Lage der markierten und/oder unmarkierten Werte liest und in einem Speicher in der Wechslervorrichtung einliest. Zunächst wird das Abspielen eines ersten Aufzeichnungsträgers gestartet, und die einem Wert zugeordneten bzw. gewünschten Aufzeichnungsbeiträge werden wiedergegeben. Der erste Aufzeichnungsträger wird gegen einen zweiten Aufzeichnungsträger ausgewechselt, wenn die gewünschten Aufzeichnungsbeiträge von dem ersten Aufzeichnungsträger abgespielt sind. Die Verfahrensschritte des Startens und Wechsels werden wiederholt, bis alle oder eine Auswahl von mehreren Aufzeichnungsträgern abgespielt wurde.

Aus EP 0224465 ist ein Verfahren zum Steuern einer automatischen Wechslervorrichtung mit einem Steuersystem bekannt, das das sukzessive und/oder selektive Abspielen einer Vielzahl von Aufzeichnungsträgern ermöglicht, wobei der Benutzer jedoch einmal für alle Aufzeichnungsträger eine Gesamtzahl der wiederzugebenden Aufzeichnungsbeiträge eingibt. Dieses Verfahren ist unflexibel, benötigt einen erheblichen Schaltungsaufwand in der Wechslervorrichtung und ist zudem sehr umständlich und nicht individuell zu programmieren.

Eine erfindungsgemäße Wiedergabevorrichtung für das System zur Wiedergabeprogrammierung von Aufzeichnungsbeiträgen von einem Aufzeichnungsträger weist z.B. eine dem abtastbaren Bereich zugeordnete Leseeinrichtung auf, mit der der Bereich abgetastet wird. Außerdem ist eine Datenverarbeitungseinheit für die Auswertung eines von der Leseeinrichtung abgetasteten Wertes einer markierten und/oder unmarkierten Stelle und ein Speicher zur Speicherung der abgetasteten Werte vorgesehen.

Ist die Wiedergabevorrichtung ein CD-Spieler oder ein MOD-Spieler, der einen optischen Abtaster zur Abtastung der Audio-und/oder Videoinformationen von der Abtastseite, das ist die Seite des Aufzeichnungsträgers, auf der die abzutastenden Audio und/oder Videoinformationen aufgebracht sind, kann es sinnvoll sein, eine separate Leseeinrichtung auf der dem Label der MOD oder CD zugewandten Seite anzuordnen, wenn der Bereich auf der Labelseite angeordnet ist. Das heißt, daß die separate Leseeinrichtung vorzugsweise auf der gegenüberliegenden Seite des optischen Abtasters zur Abtastung der Audio- und/oder Informationen in CD-Spieler oder MOD-Spieler angeordnet ist.

Allerdings ist ein Lesen bzw. Abtasten des Bereichs auf der Label- oder Abtastseit auch mit dem Audio-Abtaster möglich, wenn der Reflektionsgrad der MOD oder CD für Lichtstrahlen vom Audio-Abtaster geringer als 100 % ist, so daß die Lichtstrahlen die MOD oder CD durchdringen können. Dazu ist es vorteilhaft, den Gehäuseteil der Wiedergabevorrichtung der der Labelseite der MOD oder CD zugeordnet ist mit einer sehr hellen oder stark reflektirenden Fläche auszubilden, um die Kontrastfähigkeit zu erhöhen.

Vorzugsweise werden nach dem Abtasten der markierten und/oder unmarkierten Stellen die Werte dafür oder die den Aufzeichnungsbeiträgen zugeordneten Bezugszeichen wie z.B. Aufzeichnungsbeitragsnummer, Titelnummer, Titelbezeichnung wie Musikstückbeschriftung, Name des Interpreten, Ort und Zeit der Aufnahme usw. an einem Display der Wiedergabevorrichtung angezeigt.

Die Erfindung ist nicht auf rotierende Aufzeichnungsträger wie CD's oder MOD's beschränkt. Sie läßt sich ebenso für ein DAT-System (Digital Audio Tape) oder DCC-System (Digital Compact Cassette) sehr vorteilhaft anwenden. Bei diesen Systemen wird der abtastbare Bereich mit den markierbaren Stellen außen am Cassettengehäuse angeordnet. Die Informationen auf dem Bereich lassen sich mit einer festangeordneten Leseeinrichtung vorteilhaft beim Einzug der Cassetten in eine geeignete Wiedergabevorrichtung abtasten, oder die Leseeinrichtung bewegt sich über den abtastbaren Bereich einer in der Wiedergabeeinrichtung angeordneten Cassette hinweg.

Es ist auch vorteilhaft, die Leseeinrichtung mit der zugeordneten Datenverarbeitungseinheit als Belegleser auszubilden. Ein solcher Belegleser ist in der Lage, alphanumerische Zeiche, insbesondere Zahlen zu detektieren, deren Wert zu erkennen und zu verarbeiten. Im Falle eines Beleglesers oder einer anderen intelligenten Leseeinrichtung ist es auf einfache Weise möglich, die Reihenfolge der wiederzugebenden Aufzeichnungsbeiträge zu steuern, wenn an den markierbaren Stellen z.B. Zahlen oder Buchstaben nach einer gewissen Reihenfolge eingetragen sind. Belegleser sind bereits heute schon in der Lage, verschiedene maschinelle Schrifttypen oder Handschriften zu lesen.

Nachfolgend wird die Erfindung anhand eines möglichen Ausführungsbeispiels in Zeichnungen näher erläutert. In der Zeichnung stellen dar:
- Fig. 1a: eine Ausbildung eines erfindungsgemäßen Aufzeichnungsträgers CD,
- Fig. 1b: eine alternative Ausbildung der Bereichs zu Fig. 1a,
- Fig. 1c: eine Abbildung eines auf eine CD aufklebbaren Etiketts mit der Tabelle nach Fig. 1a
- Fig. 1d: eine alternative Ausführungsform zu Fig. 1c
- Fig. 2: ein Schaltbild eines Teils eines CD - Spielers,
- Fig. 3: ein Programmablaufplan des Systems zur Wiedergabeprogrammierung von Aufzeichnungsbeiträgen bei einer CD-Wechslervorrichtung
- Fig. 4: ein Gesamt-Blockschaltbild eines CD - Spielers
- Fig. 5: eine Aufsicht einer aufgeklappten Hartbox (Schutzhülle) zur Zentrierung eines Etiketts auf der Labelseite einer CD.

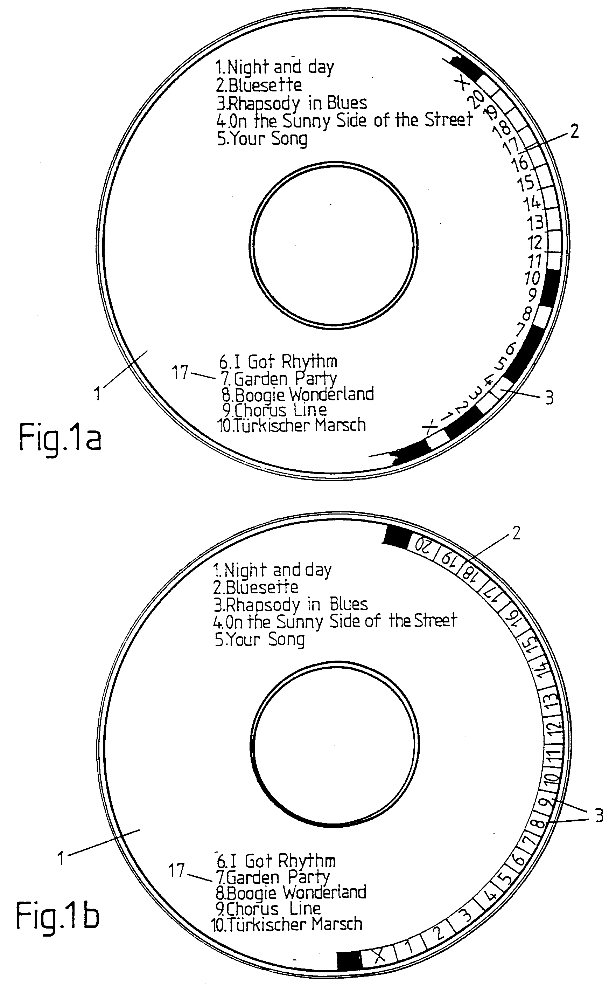

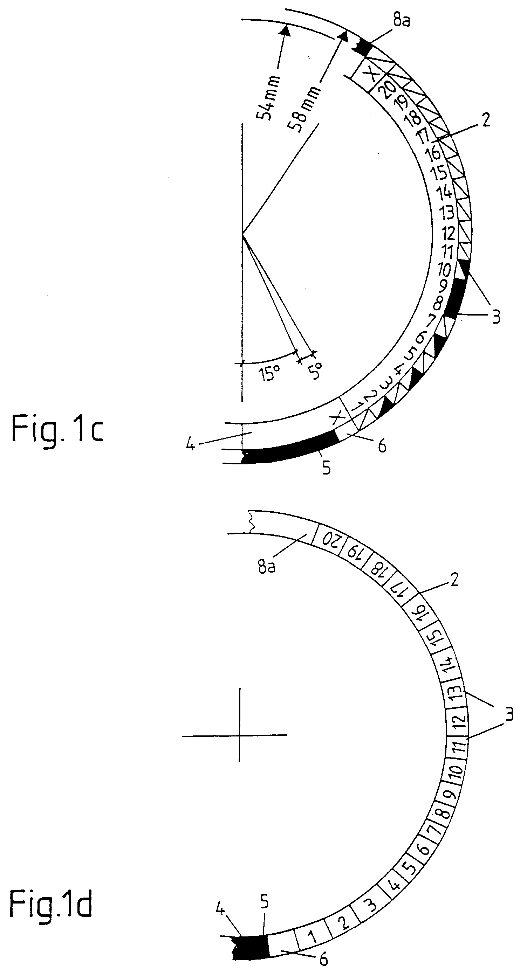

Fig. 1a zeigt die Labelseite einer Compakt-Disc 1, auf der eine abtastbare Tabelle bzw. Bereich 2 angeordnet ist, in welcher abtastbare Markierungen an örtliche vorbestimmten Feldern bzw. Stellen 3 selektiv und manuell vorgenommen werden können. Der Bereich bildet mit den Markierungen einen optisch abtastbaren Code. Den ersten zehn Stellen eins - zehn ist jeweils eine bestimmten Titelnummer 17 auf der CD zugeordnet ist. Die Stellen elf - zwanzig sind unbesetzt. Der Bereich ist auf der Labelseite der CD aufgedruckt oder haftet als spezielles Etikett 4 auf der CD. Die Form des Bereichs bzw. des Etiketts ist ein 1/3 Kreis von etwa 4 mm Breite für die Markierungsstellen mit einer Numerierung der Zahlen eins - zwanzig neben den Feldern 3 (Fig. 1a, Fig. 1c) als den Titelnummern zugeordnete Kennung neben den Stellen.

Unter Umständen ist eine solcher Bereich bzw. Etikett zu breit, so daß die Beschriftung am Außenrand auf der Labelseite der CD beim Aufkleben des Etiketts 4 verdeckt werden kann. Gemäß der Variante nach Fig. 1b oder Fig. 1d weist der Bereich nur die Breite der Markierungsstellen auf, die ihrerseits numeriert sind, sodaß der Bereich schmaler als in Fig 1a und Fig. 1c ausgebildet ist. Es ist jedoch für den Benutzer wichtig, daß die wichtigen Informationen, die auf der CD - Labelseite abgedruckt sind, wie z.B. das Inhaltsverzeichnis (17), von dem Bereich 2 oder dem Etikett nicht verdeckt werden und damit nach wie vor zugänglich sind, um eine leichte Zuordnung der Titel und des markierbaren Bereichs jederzeit auch ohne ein Beiheft zu gewährleisten.

Gewöhnlich ist der äußere Rand der CD auf der Labelseite aber nicht mit einer für das allgemeine Verständnis des Benutzers wesentlichen Beschriftung ausgefüllt, so daß dort der abtastbare Bereich ohne weiteres und sehr vorteilhaft untergebracht werden kann, weil dort der realtiv größte Platz für den schmalen Bereich 2 vorhanden ist.

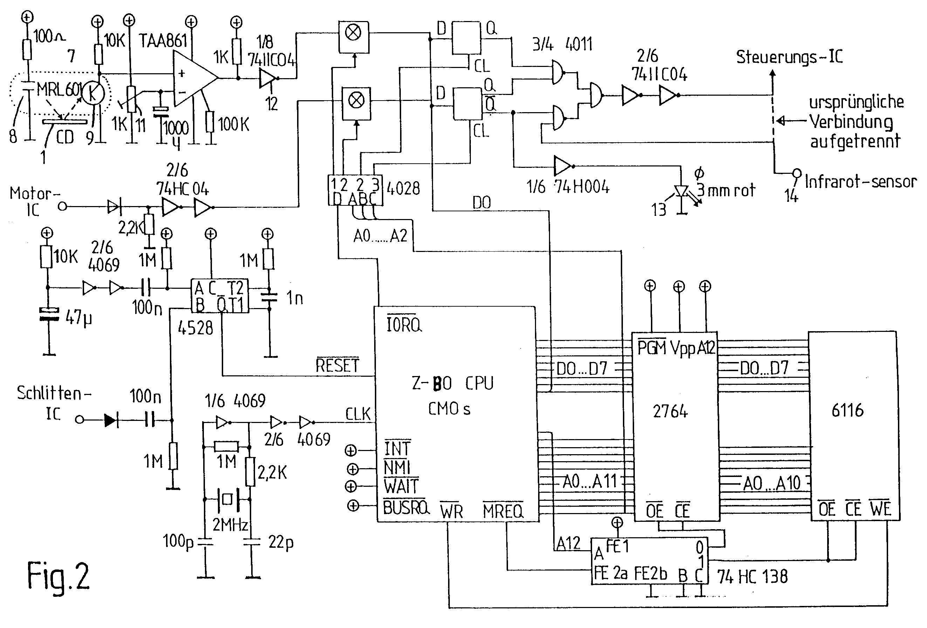

Die Markierungen beginnen mit einer schwarzen und einer weißen Zone 5 und 6, die zur Synchronisierung einer Abtastschaltung 7 (Fig 2) in der Wiedergabevorrichtung dienen. Darauf folgen die zwanzig Markierungsstellen 3, auf denen man zwanzig unbeliebte Musiktitel 17 kennzeichnen kann, indem man die betreffende Stelle schwarz ausmalt oder ausfüllt. Der ersten Stelle ist der erste Titel 17.1 zugeordnet, der zweiten Stelle der zweite Titel usw.. An die Markierungsstellen schließt sich in Drehrichtung noch ein schwarzes Synchronisationsfeld 8a an.

Weist die CD wie in Fig.1a nur zehn Musiktitel auf, ist auch nur die Markierung von Titeln eins bis zehn sinnvoll. Es ist daher einfacher, wenn die markierbare Stellenanzahl bei einer CD genau der Anzahl der Musiktitel entspricht. Bei einer MOD sollte die Stellenzahl allerdings nicht so stark eingegrenzt werden, da vor einer Aufnahme einer Gesamt-MOD die Anzahl der Aufzeichnungsbeiträge meistens noch unbestimmt ist.

Gemäß Fig. 1c hat die weiße Zone der Markierungsstellen 3 in dem Bereich 2 eine Länge von 5° (bezogen auf den Mittelpunkt der CD), was einer Länge von etwa 5 mm entspricht. Für diese Länge sind entsprechend angepaßte Warteschleifen in der Auswertungsschaltung bzw. Auswertungsprogramm des Mikroprozessorsystems (Fig. 2) vorhanden. Eine wie vorstehend beschriebene Bereichsanordnung ist sehr vorteilhaft für eine Abtastung bei in etwa gleichbleibender Rotationsgeschwindigkeit des Aufzeichnungsträgers.

Die zuverlässigste Funktion der Abtastschaltung 7 wurde in einem Test mit Etiketten 4 aus weißen Papier erzielt, wobei die Markierungen mit einem schwarzen Filzstift erfolgten. Bei der Markierung ist dabei zu achten, daß der Kontrast der weißen und schwarzen Stellen groß genug ist. Unter Umständen ist hierzu ein spezieller Filzstift mit einer speziellen, infrarot absorbierenden Farbe notwendig, wenn als Leseeinrichtung für die markierbaren Stellen eine Infrarot-Reflex-Lichtschranke verwendet wird. Es sollte beim Aufbringen des Etiketts wie auch beim Markieren darauf geachtet, daß die empfindliche Labelseite der CD nicht von Kratzern, Weichmachern im Klebstoff des Etiketts oder in der Schreibflüssigkeit eines Markiestiftes beschädigt wird.

Eine weitere Möglichkeit zur Kontrastherstellung sind vormagnetisierte Scheiben von der Größe einer Markierungsstelle. Diese werden zur Markierung einer Stelle auf dem Bereich fest aufgebracht und können mit einem magnetischen Abtaster als Leseeinrichtung im CD-Spieler gelesen werden. Bei der Art und Weise der Markierung oder Beschriftung der Stellen 3 im Bereich gibt keine Einschränkungen, solange für die Leseeinrichtung 41 oder 601 noch ein genügender abtastbarer Kontrast vorhanden ist.

Wird der Bereich 2 bereits bei der CD Herstellung auf das reflektierende Material aufgedruckt, oder die Etiketten haben eine metallisch-reflektierende Oberfläche, ist der notwendige Kontrast leichter zu erreichen. Dann kann es schon genügen, wenn die einzelnen Markierungsfelder 3 mit einer gut deckenden Kontrastmittel, vorzugsweise schnell trocknende Farbe markiert werden. Außerdem kann die Zahl der Markierungsfelder bei der Herstellung an die Titelanzahl der CD angepaßt werden.

Eine Möglichkeit zur qualitativ verbesserten Wiedergabe von gewünschten Aufzeichnungsbeiträgen läßt sich mittels der Markierung bestimmter Felder erreichen. Dazu erhalten die markierbaren Felder (3) gemäß Fig. 1c im Bereich 2 jeweils einen Unterteilungsstrich z.B. in der Mitte oder entlang der Diagonalen eines markierbaren Feldes. Vom Benutzer wird ein Feld nur bis zur Hälfte markiert, wenn nach seiner Meinung dieser Musiktitel z.B. durch einen Kratzer gestört wiedergegeben wird. Das Abtasten und Erkennen von verschiedenen Markierungsformen ist für ein Lesegerät unproblematisch. Im Abspielgerät wird dann für den so markierten Titel eine Gegenmaßnahme vorgenommen, d.h. die Fehlerkorrekturschaltung ist von vornherein für das Auftreten von Fehler sensibilitiert. Häufig muß bei der Wiedergabe von mit Kratzern gestörten Aufzeichnungsbeiträgen bei der sogenannten Tracking-Regelkreisverstärkung ein Kompromiß gemacht werden und zwar um bei kurzen Stößen von außen (Schockeinfluß) noch nicht aus der Regelung der CD zu kommen, soll die Tracking-Verstärkung groß genug sein. Bei Vorliegen von Kratzern dagegen klein. Das Abspielgerät arbeitet gemäß diesem Vorschlag immer normal in Kompromiß-Stellung, wenn keine Feld-Hälfte markiert ist, verzichtet jedoch auf die Kompromiß-Schockunempfänglichkeit für die Aufzeichnungsbeiträge, die entsprechend zu Hälfte gekennzeichnet sind, weil dort Kratzer oder andere Störungen einen ungünstigen Einfluß ausüben wurden, wenn der Kompromiß aufrechterhalten bleibt. Dadurch stellt sich der Vorteil ein, daß Benutzer eine verkratzte Stelle eines Aufzeichnungsbeitrages mit großer Wahrscheinlichkeit ohne Störungen wiedergeben kann.

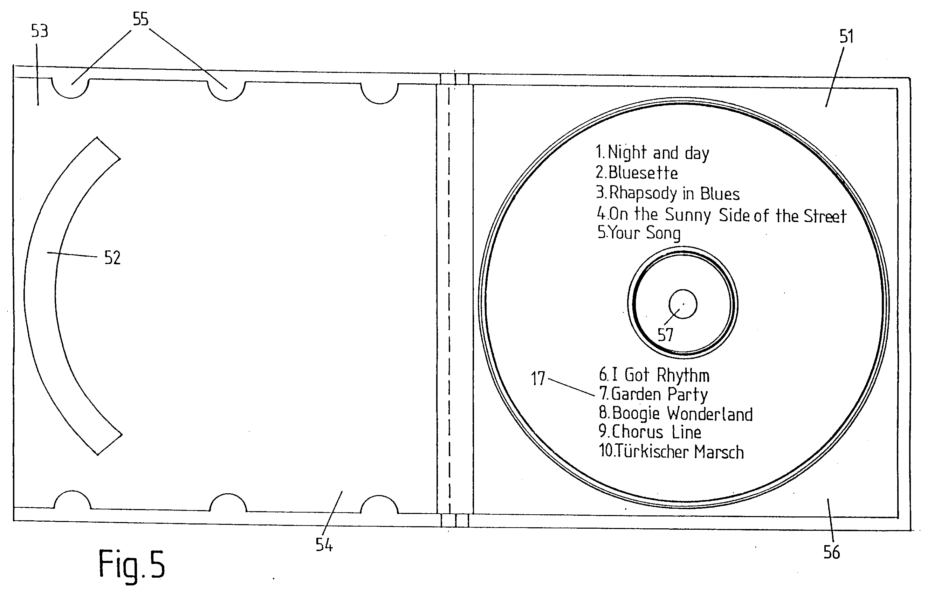

Zum Schutz gegen Schäden wird bekanntlich eine CD 1 regelmäßig in eine aufklappbaren Hartbox 51 (Fig. 5) gelegt und dort in einer Halterung 57 in einer definierten Lage arretiert. Die Hartbox eignet sich sehr gut zum exakten Aufbringen eines Etiketts 52 nach Fig. 1c oder Fig. 1d, wenn das Etikett ein heraustrennbarer Teil eines Blattes 53 ist, welches in Fig. 5 in der linken Klappe 54 eingelegt ist. Üblicherweise wird dort ein Heft oder Informationsblatt mit Angaben über die CD lösbar zwischen Führungen eingelegt. Da die Ausmaße und Abmaße der CD in der Hartbox fest definiert sind, kann mit einem Blatt in der linken Klappe in Fig. 5, welches das Etikett (dem Betrachter ist die Rückseite des Etiketts zugewandt) an der geeigneten Stellen aufweist, eine sehr genaue und leicht handhabbare und exakte Anordnung des Etiketts beim Schließen der Hartbox durchgeführt werden. Das Etikett bleibt nach dem Zusammenklappen der Hartbox an der vorgesehenen Stelle der Labelseite der CD haften und kann leicht von dem Blatt in der linken Klappe gelöst werden.

In zunehmenden Maße werden CD's und MOD's in einer Cartrigde (feste Schutzhülle) angeordnet und auch in der Cartrigde liegend abgespielt werden. Zu diesem Zweck wird nach Einbringen der Cartrigde ein Schlitz an der Abtastseite freigegeben, durch den der Laser-Abtaster Zugang zur Platte bekommt. Gemäß vorliegender Erfindung wird die Cartrigde an der Labelseite im Abschnitt der Markierungen ebenfalls zugänglich gemacht werden, wenn ein gesonderter Markierungs-Abtaster verwendet wird. Diese Öffnung der Cartrigde an der Labelseite des Aufzeichnungsträgers entspricht im wesentlichen der Größe eines Markierungsfeldes. Soll der Bereich mittels des Laser-Abtasters abgetastet werden, ist es sinnvoll, die der Labelseite zugewandte Cartrigde-Innenseite sehr hell bzw. mit einer stark reflektierenden Schicht zu versehen, um Lichtstrahlen des Audio-Abtasters in geeigneter Weise zu reflektieren bzw. für die Lichtstrahlen einen entsprechend großen Kontrast herzustellen.

Fig. 2 zeigt eine Abtastschaltung 7 mit einem Mikroprozessorsystem, um die markierten Stellen 3 in dem Bereich 2 von der CD 1 abzutasten und die abgetasteten Werte zu verarbeiten bzw. auszuwerten.

Für die Abtastung der Markierungen in dem Bereich 3 von der CD 1 wird eine Infrarot-Reflex-Lichtschranke vom Typ MRL601 als feststehende Leseeinrichtung verwendet. Sie besteht aus einer Infrarot-LED 8 und einem Fototransistor 9, die zusammen in einem Gehäuse integriert sind. Durch einen eingebauten Infrarotfilter entsteht eine hohe Fremdlichtsicherheit, sodaß die Schaltung sogar bei geöffnetem Gerät und bei normaler Arbeitsbeleuchtung überprüft und eingestellt werden kann. Dieses ist bei der Einstellung eines Prototyps sinnvoll.

Die Lichtschranke MRL601 hat einen sehr guten Wirkungsgrad im Abstand von 5 mm über der abzutastenden Fläche und ist daher in dieser Höhe über dem Außenrand (Umfang) der in Endlage (Abspielposition) befindlichen CD 1 im CD-Spieler montiert.

Der Fototransistor ist mit dem nichtinvertierenden Eingang eines Operationsverstärkers vom Typ TAA861 verbunden, der Impulse des Fototransistors verstärkt. Hierzu ist ein Trimmpotentiometer 11 auf den richten Pegel eingestellt und mit dem invertierenden Eingang des Operationsverstärkers verbunden.

Die Einstellung läßt sich leicht mit Hilfe eines Zweikanal-Oszilloskops durchführen, mit dem man die Impulse am Kollektor des Fototransistors mit denen am Ausgang des Operationsverstärkers vergleicht.

Am Fototransistor werden starke Impulse erkannt, die durch geschwärzte Markierungsstellen entstehen, und schwache Impulse, die durch die dünnen Markierungslinien 10 zwischen den Markierungsfeldern hervorgerufen werden und diese voneinander trennen. Der Trimmer ist nun so eingestellt, daß die schwachen Impulse gerade nicht mehr durchgeschaltet werden, sondern nur die kräftigen Impulse.

Die kräftigen Impulse werden durch einen nachfolgenden Inverter 12 umgekehrt, so daß die hellen Flächen im Bereich 2 positive Impulse hervorrufen.

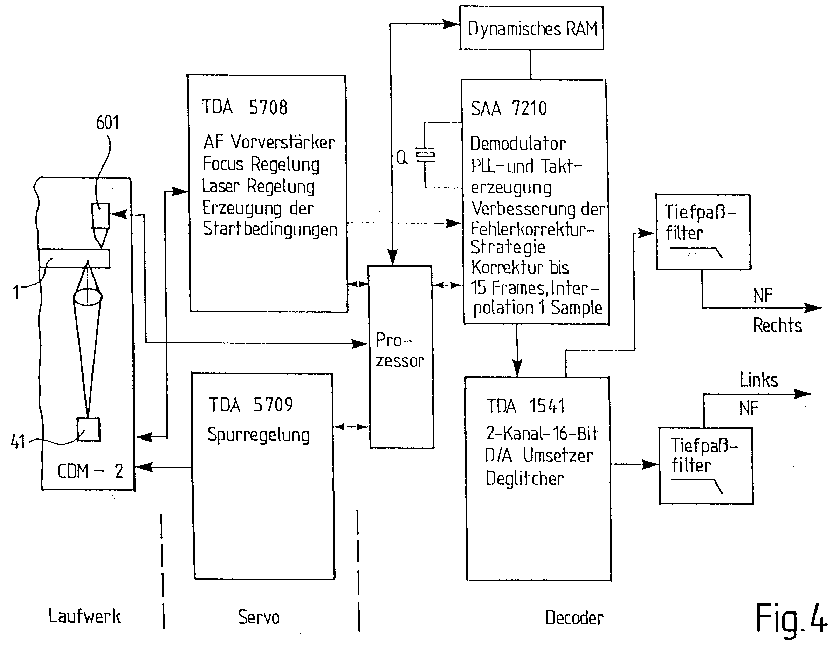

Zur Nachrüstung eines CD-Spielers PD-7500 konnte die gewünschte Programmierung mit der gezeigte Schaltung in Fig. 2 ohne Probleme erreicht werden. Dazu mußte nur die in Fig. 2 oben rechts gezeigte ursprüngliche Verbindung zwischen einem Steuerungs-IC (nicht dargestellt) und einem Infrarot-Sensor 14, der Befehlsignale von einer Fernbedienung erhält, aufgetrennt werden. Ein Gesamt-Blockschaldbild eines CD-Spielers 18 ist in Fig. 4 gezeigt. Das in Fig. 2 dargestellte als Datenverarbeitungseinheit ausgebildete Mikroprozessorsystem ist in dem eigentlichen Prozessor des CD-Spielers integriert, der die Abtastsignale von der Leseeinrichtung 601 verarbeitet.

Die Verarbeitung bzw. Auswertung (Fig. 2) der Impulse vom Inverter 12 und die weitere Steuerung erfolgt durch das in Fig. 2 dargestellte Mikroprozessorsystem, dessen Herz ein Prozessor Z-80 CPU ist. Die gesamte Schaltung ist (vom EPROM 2764 abgesehen) vollständig in CMOS-Technologie aufgebaut. Der Stromverbrauch ist so niedrig, daß die Versorgungsspannung direkt aus dem CD-Spieler entnommen werden kann.

Aus dem CD-Spieler werden noch zwei weitere Informationen bezogen: An einem IC (nicht dargestellt), das für die Bewegung des Schlittens zuständig ist, auf dem die CD in das Gerät eingezogen wird, wird ein Impuls abgezapft, aus dem Mikroprozessor ein RESET-Signal erhält. Ebenso bekommt der Mikroprozessor ein RESET-Signal, wenn der CD-Spieler eingeschaltet wird. Die Abtastschaltung beginnt also automatisch zu arbeiten, sobald der CD-Spieler eingeschaltet wird oder wenn eine neue CD durch den Schlitten eingezogen wird.

An einem anderen IC, das den Motor betreibt, der die CD rotieren läßt, werden Impulse abgezapft, die die Beschleunigung des Motors anzeigen. Bleiben diese Impulse aus, so ist dies ein Zeichen dafür, daß sich die CD mit einer konstanten Geschwindigkeit dreht. Erst dann werden die Markierungen der der Stellen ausgewertet. Dies geschieht gleich am Anfang, wenn der CD-Spieler die eingezogene oder eingelegte CD analysiert und unter anderem die Titelanzahl und Spieldauer feststellt. Dazu wird ein festes, unveränderliches Datenverzeichnis - TOC (Table Of Content) genannt- und die UTOC (User Table Of Content) der CD gelesen.

Nach der Analyse der Markierungen muß die Information an den CD-Spieler weitergegeben werden. Dies geschieht, indem der Mikroprozessor Z-80 die entsprechenden Steuerimpulse einer Infrarot-Fernbedienung simuliert. Deshalb ist die ursprüngliche Verbindung zwischen dem Infrarot-Sensor 14 und dem CD-Steuerungs-IC aufgetrennt. Zuvor schaltet der Mikroprozessor den Infrarot-Sensor des CD-Spielers ab, damit diese Simulation durch eine Fernbedienung nicht gestört werden kann. Dieser Zustand wird an der Frontseite des Gerätes durch das Aufleuchten einer Leuchtdiode 13 deutlich gemacht.

Zuerst sendet der Prozessor Z-80 das Signal für "Programmierung", dann die Nummern der unmarkierten Titel und anschließend das Signal für "Play", um die Musikwiedergabe zu starten. Zuletzt wird der Infrarot-Sender wieder eingeschaltet, worauf die Leuchtdiode 13 erlischt. Dann geht das dargestellte Programmiersystem in den Halt-Zustand über, den es nur durch einen erneuten RESET-Signal verlassen kann. Die Wiedergabe der gewünschten Titel kann beginnen. Dieser Halt-Zustand wird übrigens sofort eingenommen, wenn das System am Fehlen der schwarzen Synchronisationszone feststellt hat, daß die CD keinen abtastbaren Bereich 2 oder keine Markierungen in den Stellen 3 hat.

Der CD-Spieler zeigt nun an einem Display entweder die markierten oder unmarkierten Titelnummern an. Da die markierten Stellen verabredungsgemäß den unerwünschten Titeln zugeordnet sind, ist die Anzeige der Titelnummern sinnvoll, die auch wiedergegeben werden, also der Nummern der Stellen, die nicht markiert sind mit Ausnahme der Stellen elf - zwanzig. Der CD-Spieler fängt nun an, die den unmarkierten Stellen zugeordneten Titel nacheinander wiederzugeben. Sind wie in Fig. 1a beispielsweise die Felder 1, 2, 5, 6, 7, 9 und 10 markiert, so werden die Musikstücke 3, 4 und 8 automatisch wiedergegeben. Automatisch und ohne Verzögerungszeit wird nach dem Einzug der CD in den CD-Spieler mit der Widergabe des dritten Titels begonnen. Ebenso ist der zeitliche Sprung von Titel drei nach Titel acht in etwa genauso groß wie der Sprung von Titel drei nach vier. Die Verzögerungszeiten beim Sprung vom Titel vier nach acht sind daher sehr gering.

Das in Fig. 4 dargestellte Gesamt-Blockschaltbild eines CD-Spielers zeigt die der Labelseite der CD 1 zugewandte Leseeinrichtung 601 und den der Abtastseite der CD 1 zugewandten Abtast-Laser 41 in der CD-Aufnahmevorrichtung im CD-Spieler. Die Leseeinrichtung 601 wird von einem Prozessor gesteuert, und die markierten oder unmarkierten Werte werden in einen dynamischen Speicher (RAM) eingelesen.

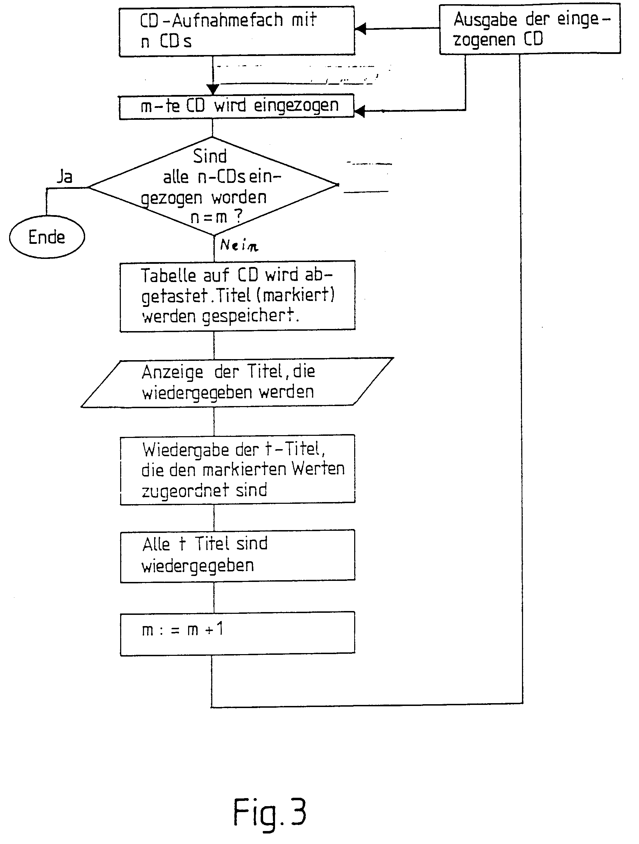

Fig. 3 zeigt einen Flußdiagramm eines als CD - Wechslervorrichtung ausgebildeten CD - Players. Die Wechslervorrichtung weist eine als Aufnahmefach ausgebildete Aufnahmevorrichtung für eine Anzahl n CD auf. Ein Steuersystem erlaubt bei solchen Wechslervorrichtungen das sukzessive und/oder selektive Abspielen der in dem Aufnahmefach liegenden Aufzeichnungsträger.

Zunächst wird eine erste CD über einen Schlitten in die Abspielpostion gezogen. Wie vorstehend beschrieben wird der Bereich von der Labelseite abgetastet, und die vom Benutzer ausgewählten Musiktitel werden wie vorstehen beschrieben wiedergegeben. Die erste CD wird gegen eine zweite im Aufnahmefach abgelegte CD ausgewechselt, wenn die den markierten oder unmarkierten Stellen zugeordneten Aufzeichnungsbeiträge von der ersten CD abgespielt sind. Diese Verfahrenschritte des Einziehens, Lesens, Wiedergebens und Wechselns wiederholen sich so lange, bis alle oder eine Auswahl der im Aufnahmefach abgelegten CD abgespielt wurde.

## Patentansprüche

1. System zur Wiedergabeprogrammierung von auf einem Aufzeichnungsträger (1) gespeicherten Aufzeichnungsbeiträgen (17), **dadurch gekennzeichnet** , daß der Aufzeichnungsträger (1) einen abtastbaren Bereich (2) mit wenigstens einer örtlich vorbestimmten, manuell und/oder maschinell markierbaren Stelle (3) aufweist und der vorbestimmten Stelle ein bestimmter Aufzeichnungsbeitrag (17) auf dem Aufzeichnungsträger (1) zugeordnet ist, daß eine Leseeinrichtung (601, 41) für die Abtastung des Bereichs (2) und eine Datenverarbeitungsschaltung (Z-80) für die Auswertung der abgetasteten Werte des Bereichs (2) vorgesehen ist.

2. Aufzeichnungsträger für ein System zur Wiedergabeprogrammierung von auf einem Aufzeichnungsträger (1) gespeicherten Aufzeichnungsbeiträgen (17), **dadurch gekennzeichnet**, daß der Aufzeichnungsträger (1) oder eine Umhüllung des Aufzeichnungsträgers einen abtastbaren Bereich (2) mit wenigstens einer örtlich vorbestimmten, manuell markierbaren Stelle (3) aufweist und der vorbestimmten Stelle ein bestimmter Aufzeichnungsbeitrag (17) auf dem Aufzeichnungsträger (1) zugeordnet ist.

3. Aufzeichnungsträger nach Anspruch 1 und/oder 2, **dadurch gekennzeichnet,** daß der Aufzeichnungsträger ein optisch abtastbarer Aufzeichnungsträger, z.B. eine Compact-Disk (CD) oder Magneto-Optische-Disk (MOD) oder eine Foto-Disk ist, der eine Labelseite und eine Abtastseite aufweist, daß der Bereich (2) auf der Labelseite oder der Abtastseite des Aufzeichnungsträgers angeordnet ist, und daß jedem Aufzeichnungsbeitrag eine Adresse auf dem Aufzeichnungsträger zugeordnet ist.

4. Aufzeichnungsträger nach Anspruch 3, **dadurch gekennzeichnet**, daß der Bereich (2) als kreis- oder teilkreis- oder spiralförmiger Ring ausgebildet ist und vorzugsweise am Außenrand des kreisförmigen Aufzeichnungsträgers (1) angeordnet ist (Fig. 1a), und/oder daß der Bereich wenigstens eine Stelle (5, 6, 8a) zur Synchronisation der Abtastung aufweist.

5. Aufzeichnungsträger nach einem der vorhergehenden Ansprüche, **dadurch gekennzeichnet**, daß die Markierungen an den vorbestimmten Stellen löschbar sind und/oder die Anzahl der markierbaren Stellen (3) in dem Bereich (2) der Anzahl der Aufzeichnungsbeiträge (17) auf dem Aufzeichnungsträger (1) entspricht und/oder jede markierbare Stelle eine Kennung aufweist.

6. Etikett (4, 52) oder Aufkleber zur Einbindung eines bereichsfreien, rotierenden Aufzeichnungsträgers mit einer Labelseite, z.B. Compakt-Disc (CD) oder Magneto-Optische-Disc (MOD), in das System nach Anspruch 1, wobei das Etikett auf der Labelseite des Aufzeichnungsträgers (1) befestigbar ist und einen abtastbaren Bereich (2) mit wenigstens einer örtlich vorbestimmten, manuell und/oder maschinell markierbaren Stelle (3) aufweist und einer vorbestimmten Stelle ein bestimmter Aufzeichnungsbeitrag (17) auf dem Aufzeichnungsträger zugeordnet ist.

7. Verfahren zur Steuerung einer Wiedergabevorrichtung (18) mit einer Aufnahmevorrichtung (19) für einen Aufzeichnungsträger (1) nach einem der Ansprüche 1 - 6, **gekennzeichnet durch** folgende Verfahrensschritte:
a: Nach Einlegen oder Auflegen eines Aufzeichnungsträgers (1) nach einem der Ansprüche 2 - 6 in oder auf die Aufnahmevorrichtung (19) der Wiedergabevorrichtung (18) wird der Bereich (2) mittels einer Leseeinrichtung (601, 41) abgetastet.
b: Die markierten und/oder unmarkierten Stellen (3) des Bereichs (2) werden detektiert und die detektierten Werte gespeichert.
c: Die den markierten oder unmarkierten Stellen (3) zugeordneten Aufzeichnungsbeiträge (17) werden wiedergegeben.

8. Verfahren nach Anspruch 7, **dadurch gekennzeichnet**, daß an der Wiedergabevorrichtung (18) ein Wert für die markierte und/oder unmarkierte Stelle (3) und/oder eine, der markierten und/oder unmarkierten Stelle zugeordnete Kennung eines Aufzeichnungsbeitrages (17) z.B. Titel, Titelnummer optisch und/oder akustisch angezeigt wird.

9. Verfahren nach Anspruch 7 und/oder 8, **dadurch gekennzeichnet,** daß der Aufzeichnungsträger (1) kreisförmig ausgebildet ist und und der Bereich (2) beim Rotieren des Aufzeichnungsträgers abgetastet wird.

10. Verfahren nach Anspruch 9, **dadurch gekennzeichnet**, daß der Aufzeichnungsträger (1) während des Abtastvorganges des Bereichs (2) eine in etwa gleichbleibende Geschwindigkeit aufweist.

11. Verfahren nach einem der Ansprüche 9 und/oder 10, **dadurch gekennzeichnet**, daß bei einer CD oder MOD der Bereich (2) abgetastet wird, während eine weitere Leseeinrichtung (41) in der Wiedergabevorrichtung ein festes, unveränderliches Datenverzeichnis (Table Of Content (TOC)) und/oder veränderliches Inhaltsverzeichnis (User-Table-Of Content (UTOC)) von der Abtastseite abtastst und dabei unter anderem die Titelanzahl und Spieldauer des Aufzeichnungsträgers feststellt.

12. Verfahren nach einem Ansprüche 7 - 11 zum Steuern einer als automatischen Wechslervorrichtung ausgebildeten Wiedergabevorrichtung (18) mit einem Steuersystem, daß das sukzessive und/oder selektive Abspielen einer Anzahl n von Aufzeichnungsträgern (1) ermöglicht wird, unter Verwendung eines Aufzeichnungsträgers nach einem der Ansprüche 2 - 5 und unter Verwendung einer Leseeinrichtung (601, 41) in der Wiedergabevorrichtung, die die örtliche Lage der manuell markierbaren, örtlich vorbestimmten Stellen (3) liest und in einen Speicher (6116) in der Wechslervorrichtung einliest,
**gekennzeichnet durch** folgenden Verfahrensschritte:
Das Abspielen eines ersten Aufzeichnungsträgers (1) wird gestartet und der jeweils einer markierten oder unmarkiertem Stelle (3) zugeordnete Aufzeichnungsbeitrag (17) wird wiedergegeben,
der erste Aufzeichnungsträger wird gegen einen zweiten Aufzeichnungsträger ausgewechselt, wenn die den markierten oder unmarkierten Stellen zugeordneten Aufzeichnungsbeiträge von dem ersten Aufzeichnungsträger abgespielt sind,
und die Verfahrensschritte des Startens und Wechsels werden wiederholt, bis alle n oder eine Auswahl n - m von Aufzeichnungsträgern abgespielt wurde.

13. Verfahren nach einem der Ansprüche 7 - 12, **dadurch gekennzeichnet,** daß die Zeitdauer der Wiedergabe eines Aufzeichnungsbeitrages z.B. eines stehenden Bildes in einer Anzeigeeinrichtung, automatisch oder mittels einer Bedienungseinrichtung, z.B. in Form einer Fernbedienung, gesteuert wird.

14. Wiedergabevorrichtung für ein System zur Wiedergabeprogrammierung nach einem der vorhergehenden Ansprüche, **dadurch gekennzeichnet**, daß die Wiedergabevorrichtung eine dem Bereich (2) zugeordnete Leseeinrichtung (601, 41) für die Abtastung des Bereichs (2), eine Datenverarbeitungsschaltung für die Auswertung eines von der Leseeinrichtung abgetasteten Wertes einer markierten und/oder unmarkierten Stelle (3) und einen Speicher (6116) zur Speicherung von abgetasteten Werte aufweist.

15. Wiedergabevorrichtung nach Anspruch 14, **dadurch gekennzeichnet,** daß die Wiedergabevorrichtung ein CD-Spieler oder MOD- oder Foto-CD-Spieler ist der einen optischen Abtaster (41) zur Abtastung der Audio- und/oder Videoinformationen von der Abtastseite des Aufzeichnungsträgers (1) aufweist und bei der die Leseeinrichtung (601) zur Abtastung des abtastbaren Bereichs (2) auf der dem Label des in der Wiedergabevorrichtung angeordneten Auzeichnungsträgers (1) zugewandten Seite angeordnet ist.

16. Widergabevorrichtung nach Anspruch 14 oder 15, **dadurch gekennzeichnet,** daß die Leseeinrichtung (41, 601) zur Abtastung des Bereichs (2) als Belegleser ausgebildet ist, der in der Lage ist, alphanumerische Zeichen zu detektieren und deren Werte zu verarbeiten.
